(19) Europäisches Patentamt
European Patent Office
Office européen des brevets

(11) **EP 3 039 444 B1**

(12) **EUROPÄISCHE PATENTSCHRIFT**

(45) Veröffentlichungstag und Bekanntmachung des Hinweises auf die Patenterteilung:
**23.10.2019  Patentblatt 2019/43**

(21) Anmeldenummer: **14731972.7**

(22) Anmeldetag: **24.06.2014**

(51) Int Cl.:
*G01S 3/20* (2006.01)       *G01S 3/44* (2006.01)
*G01S 7/35* (2006.01)       *G01S 13/34* (2006.01)
*G01S 13/42* (2006.01)      *G01S 13/93* (2006.01)
*G01S 13/44* (2006.01)

(86) Internationale Anmeldenummer:
**PCT/EP2014/063208**

(87) Internationale Veröffentlichungsnummer:
**WO 2015/028167 (05.03.2015 Gazette 2015/09)**

(54) **RADARSENSOR FÜR KRAFTFAHRZEUGE**

RADAR SENSOR FOR MOTOR VEHICLES

CAPTEUR RADAR POUR VÉHICULES À MOTEUR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **27.08.2013  DE 102013216970**

(43) Veröffentlichungstag der Anmeldung:
**06.07.2016  Patentblatt 2016/27**

(73) Patentinhaber: **Robert Bosch GmbH**
**70442 Stuttgart (DE)**

(72) Erfinder:
• **HELLINGER, Raphael**
  **483313418 Farmington Hills (DE)**
• **STEINHAUER, Matthias**
  **71711 Steinheim (DE)**

(56) Entgegenhaltungen:
**WO-A1-2012/089385       DE-A1- 10 256 524**
**DE-A1-102005 049 772**

EP 3 039 444 B1

## Beschreibung

Stand der Technik

Die Erfindung betrifft einen Radarsensor für Kraftfahrzeuge.

Radarsensoren werden zur Erfassung des Verkehrsumfelds im Rahmen von Fahrerassistenzsystemen eingesetzt, beispielsweise zur radargestützten Abstandsregelung (ACC; Adaptive Cruise Control). Ein derartiges Fahrerassistenzsystem ist beispielsweise aus der Veröffentlichung "Adaptive Fahrgeschwindigkeitsregelung ACC", Robert Bosch GmbH, Gelbe Reihe, Ausgabe 2002, Technische Unterrichtung, bekannt. Eine wichtige Messgröße des Radarsensors ist neben der Entfernung und der Relativgeschwindigkeit auch der Winkel der georteten Objekte. Hierbei ist sowohl der horizontale Winkel (Azimutwinkel) als auch der vertikale Winkel (Elevationswinkel) von Bedeutung. Der Azimutwinkel wird zur Schätzung des Querversatzes und damit zur Spurzuordnung verwendet. Der Elevationswinkel ermöglicht beispielsweise eine Unterscheidung zwischen Objekten, die unterfahrbar oder überfahrbar sind, und Objekten, die echte Hindernisse darstellen. So lassen sich insbesondere bei Sicherheitsanwendungen (PSS; Predictive Safety Systems) Fehlauslösungen durch metallische Gegenstände wie Kanaldeckel, Blechdosen und dergleichen vermeiden.

Das azimutale Winkelauflösungsvermögen wird zumeist dadurch erreicht, dass mehrere winkelversetzte Radarkeulen erzeugt werden, in denen die Radarechos in getrennten Kanälen ausgewertet werden. Es sind auch scannende Radarsysteme bekannt, bei denen die Radarkeule verschwenkt wird. Das Verschwenken der Sende- und/oder Empfangskeule kann beispielsweise mit Hilfe von Phased-Array Antennen erreicht werden. Die Richtcharakteristik der Antennenanordnung ergibt sich dann durch Überlagerung der Strahlungsdiagramme der einzelnen Antennenelemente.

Ein Radarsensor nach dem Oberbegriff des Anspruchs 1 ist aus DE 102 56 524 A1 bekannt.

Aus WO 2012 089 385 A1 ist ein Radarsensor für Kraftfahrzeuge bekannt, mit dem der Elevationswinkel georteter Objekte zumindest grob abgeschätzt werden kann. Dieser Radarsensor hat mindestens eine Gruppenantenne, die durch eine lineare Anordnung von Antennenelementen gebildet wird, eine Speiseeinrichtung zum Einspeisen von Sendesignalen mit einstellbarer Phasenbeziehung in die Antennenelemente, eine Steuereinrichtung zur Ansteuerung der Speiseeinrichtung, und eine Auswerteeinrichtung zur Auswertung von empfangenen Radarechos und zur winkelauflösenden Ortung von Objekten.

DE 10 2005 049 772 A1 beschreibt einen Radarsensor mit einer Umschalteinrichtung, mit der zwischen mehreren Sendeantennen umgeschaltet wird.

Offenbarung der Erfindung

Aufgabe der Erfindung ist es, einen winkelauflösenden Radarsensor mit vereinfachtem Aufbau zu schaffen.

Diese Aufgabe wird durch einen Radarsensor nach den Ansprüchen 1 und 2 gelöst.

Die von den beiden Untergruppen emittierten Radarwellen überlagern sich zu einer Radarkeule, deren Hauptabstrahlrichtung von der jeweiligen Phasendifferenz abhängig ist. Wenn die Basis-Phasendifferenz null ist, so werden in einem ersten Messzyklus alle Antennenelemente der gesamten Gruppenantenne phasengleich angesteuert, und die Hauptabstrahlrichtung entspricht der Normalen zur Ebene der Gruppenantenne. Im nächsten Messzyklus ist die Phasendifferenz dann um einen festen Betrag größer, der typischerweise in der Größenordnung von 180° liegt. Bei dieser Phasendifferenz von 180° erhält man auf der Normalen destruktive Interferenz, so dass die Pegel der empfangenen Radarechos für Objekte, die auf der Normalen liegen, minimal sind. Wenn die Basis-Phasendifferenz von null verschieden ist, so weicht im ersten Messzyklus die Hauptabstrahlrichtung von der Normalen ab, und im nächsten Messzyklus weicht entsprechend die Richtung destruktiver Interferenz von der Normalen ab. Folglich lassen sich die Radarkeulen innerhalb gewisser Grenzen verschwenken, indem man die Basis-Phasendifferenz variiert. Wenn ein einzelnes Objekt geortet wird, so gibt es eine feste und bekannte Beziehung zwischen dem Winkel, unter dem dieses Objekt erscheint, und der Basis-Phasendifferenz, bei der der Pegelunterschied zwischen dem im ersten Messzyklus empfangenen Radarecho (bei konstruktiver Interferenz) und dem im nächsten Messzyklus empfangenen Radarecho (bei destruktiver Interferenz) maximal ist. Indem man die Basis-Phasendifferenz variiert, lässt sich folglich der Winkel des georteten Objekts bestimmen oder zumindest grob abschätzen.

Diese Lösung hat den Vorteil, dass im Prinzip nur ein einziger Phasenschieber zur Einstellung der jeweiligen Phasendifferenzen benötigt wird, während beispielsweise bei herkömmlichen Phased-Array -Antennen für jedes einzelne Antennenelement ein gesonderter Phasenschieber vorhanden sein muss.

Die oben dargestellte Lösung lässt sich analog auch auf Gruppenantennen anwenden, die als Empfangsantennen oder in einem monostatischen Antennenkonzept als kombinierte Sende- und Empfangsantennen dienen. Gemäß einer anderen Ausführungsform hat die Erfindung deshalb auch einen Radarsensor für Kraftfahrzeuge zum Gegenstand, mit mindestens einer Gruppenantenne, die durch eine lineare Anordnung von Antennenelementen gebildet wird, einer Überlagerungseinrichtung zum Überlagern von Empfangssignalen der Antennenelemente mit einstellbarer Phasenbeziehung, einer Steuereinrichtung zur Ansteuerung der Überlagerungseinrichtung, und einer Auswerteeinrichtung zur Auswertung der empfangenen Radarechos und zur winkelauflösenden Ortung von Objekten, bei dem die Gruppenantenne in mindestens zwei nicht verschachtelte Untergruppen aufgeteilt ist, die Überlagerungseinrichtung dazu ausgebildet ist, die Empfangssignale der Antennenelemente jeder Untergruppe phasengleich zu überlagern, während die Empfangssignale der verschiedenen Untergruppen mit einer einstellbaren Phasendifferenz überlagert werden, die Steuereinrichtung dazu ausgebildet ist, die einstellbare Phasendifferenz von Messzyklus zu Messzyklus periodisch zu in der Weise zu ändern, dass die Empfangssignale in einem Messzyklus eine Basis-Phasendifferenz aufweisen und in einen anderen Messzyklus eine Phasendifferenz, die sich um einen festen Betrag von der Basis-Phasendifferenz unterscheidet, und die Steuereinrichtung weiterhin dazu ausgebildet ist, die Basis-Phasendifferenz anhand der Pegel der empfangenen Radarechos im Sinne einer Maximierung des Pegelunterschieds zwischen den Messzyklen einzustellen.

Vorteilhafte Ausgestaltungen der Erfindung sind in den Unteransprüchen angegeben.

In einer vorteilhaften Ausführungsform ist die lineare Anordnung der Antennenelemente eine vertikale Spalte, so dass ein Winkelauflösungsvermögen in Elevation erreicht wird. Die Einstellung der Basis-Phasendifferenz lässt sich dann auch dazu nutzen, etwaige Justagefehler beim Einbau des Radarsensors in das Fahrzeug zu kompensieren. Wenn der Radarsensor aufgrund eines solchen Justagefehlers beispielsweise so eingebaut wurde, dass die Normale auf die Ebene der Gruppenantenne einem von 0° verschiedenen Elevationswinkel entspricht, kann die Basis-Phasendifferenz so angepasst werden, dass die Radarkeule im ersten Messzyklus gerade so weit verschwenkt wird, dass ihre Hauptabstrahlrichtung dem Elevationswinkel von 0° entspricht.

Bevorzugt weist der Radarsensor mehrere Gruppenantennen in der Form mehrerer nebeneinander angeordneter Spalten auf, die phasengleich angesteuert werden, so dass eine stärkere Richtwirkung im Azimut erreicht wird.

Im folgenden wird ein Ausführungsbeispiel anhand der Zeichnung näher erläutert.

Es zeigen:

Fig. 1       ein Blockdiagramm eines erfindungsgemäßen Radarsensors; und

Fig. 2 bis 7   Diagramme zur Erläuterung der Funktionsweise des Radarsensors bei der Abschätzung des Elevationswinkels eines Objektes.

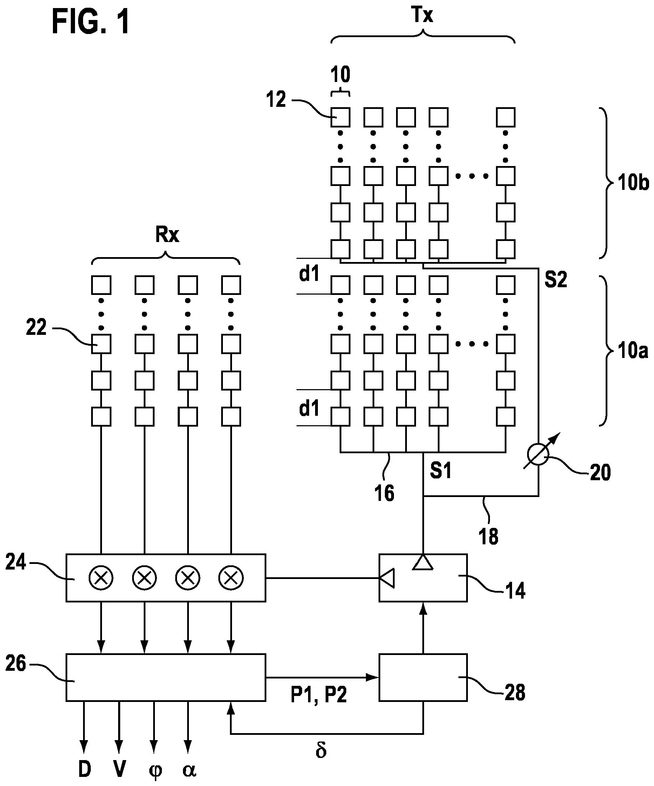

Der in Fig. 1 gezeigte Radarsensor weist eine Antennenordnung mit einer Sende-Antennenanordnung Tx und einer Empfangs-Antennenanordnung Rx auf. Die Sende-Antennenanordnung Tx weist mehrere Gruppenantennen 10 auf, die durch parallel nebeneinander angeordnete vertikale Spalten von Antennenelementen 12 gebildet werden. Jede Gruppenantenne 10 ist in zwei Untergruppen 10a und 10b unterteilt. Die Untergruppen sind nicht verschachtelt, das heißt alle zu derselben Untergruppe gehörenden Antennenelemente 12 sind einander direkt benachbart. Im gezeigten Beispiel hat jede Untergruppe die gleiche Anzahl von Antennenelementen.

Die Antennenelemente 12 dienen zum Senden eines Radarsignals, das von einem lokalen Oszillator 14 erzeugt wird. Über ein erstes Speisenetzwerk 16 wird das zu sendende Radarsignal auf die Untergruppen 10a jeder der Gruppenantennen 10 verteilt und dann innerhalb jeder Untergruppe seriell in die einzelnen Antennenelemente 12 eingespeist. Entsprechend wird über ein zweites Speisenetzwerk 18 wird das zu sendende Radarsignal auf die Untergruppen 10b jeder der Gruppenantennen 10 verteilt und dann innerhalb jeder Untergruppe seriell in die einzelnen Antennenelemente 12 eingespeist.

Die durch die Gruppenantennen 10 gebildeten Spalten weisen gleichmäßige waagerechte Abstände zueinander auf. Das Speisenetzwerk 16 ist so konfiguriert, dass sämtliche Antennenelemente 12 der Untergruppen 10a aller Gruppenantennen10 gleichphasig angesteuert werden, so dass sich durch Überlagerung der von den einzelnen Antennenelementen emittierten Strahlung eine Bündelungswirkung sowohl im Azimut als auch in der Elevation ergibt. Die Hauptabstrahlrichtung steht dabei senkrecht auf der Ebene, in der die Antennenelemente 12 beispielsweise auf einem gemeinsamen Hochfrequenzsubstrat angeordnet sind. Damit die einzelnen Antennenelemente 12 einer Untergruppe gleichphasig angeregt werden, stimmt der Abstand d1 zwischen zwei benachbarten Antennenelementen 12 innerhalb dieser Untergruppe mit der Wellenlänge $\lambda$ auf dem Substrat überein (oder beträgt ein ganzzahliges Vielfaches davon). Auch die Antennenelemente 12 der Untergruppen 10b haben den gleichen Abstand d1, und auch der Abstand zwischen dem letzten Antennenelement der Untergruppe 10a und dem ersten Antennenelement der Untergruppe 10b ist d1.

Auch das Speisenetzwerk 18 ist so konfiguriert, dass sämtliche Antennenelemente 12 der Untergruppen 10b aller Gruppenantennen 10 gleichphasig angesteuert werden. Es enthält jedoch einen Phasenschieber 20, mit dem sich eine Phasendifferenz zwischen den Sendesignalen einstellen lässt, die einerseits den Untergruppen 10a und andererseits den Untergruppen 10b zugeführt werden. Wenn diese Phasendifferenz von null verschieden ist, ergibt sich für die Sende-Antennenanordnung Tx als Ganzes durch Interferenz eine Hauptabstrahlrichtung, die von der Normalen auf die Ebene des Substrats abweicht, und damit eine Hauptabstrahlrichtung mit einem von null verschiedenen Elevationswinkel $\alpha$, wenn das Substrat vertikal in das Fahrzeug eingebaut ist.

Wenn das Radarsignal, das von der Sende-Antennenanordnung Tx emittiert wird, auf ein Objekt trifft, beispielsweise ein vorausfahrendes Fahrzeug, so wird ein Teil der Radarstrahlung reflektiert, wobei es eine von der Relativgeschwindigkeit des Objektes abhängige Dopplerverschiebung erfährt, und das reflektierte Signal wird dann von Antennenelementen 22 der Empfangs-Antennenanordnung Rx empfangen. Die Antennenelemente 22 sind in vier Spalten angeordnet und sind innerhalb jeder Spalte in Serie miteinander verbunden. Jede Spalte bildet einen Empfangskanal und ist auf einen Eingang eines Vierkanalmischers 24 geschaltet. Einem anderen Eingang dieses Vierkanalmischers 24 wird vom Oszillator 14 dasselbe Signal zugeführt, das auch an die Speisenetzwerke 16 und 18 übermittelt wird. Das von jeder Antennenspalte empfangene Signal wird mit dem Signal des lokalen Oszillators 14 gemischt. Der Vierkanalmischer 24 liefert somit als Mischprodukte vier Zwischenfrequenzsignale Z1 - Z4, deren Frequenz jeweils dem Frequenzunterschied zwischen dem empfangenen Signal und dem Signal des lokalen Oszillators 14 entspricht.

Entsprechend dem Prinzip eines FMCW-Radars (Frequency Modulated Continuous Wave) wird die Frequenz des Oszillators 14 rampenförmig moduliert (der Abstand d1 zwischen den Antennenelementen 12 entspricht daher genau genommen der mittleren Wellenlänge auf dem Substrat). Die Frequenz des von den Antennenelementen 22 empfangenen Radarechos unterscheidet sich deshalb von dem Signal des lokalen Oszillators um einen Betrag, der einerseits von der Signallaufzeit vom Radarsensor zum Objekt und zurück und andererseits, aufgrund des Doppler-Effekts, von der Relativgeschwindigkeit des Objekts abhängig ist. Entsprechend enthalten auch die Zwischenfrequenzsignale Z1 - Z4 Information über den Abstand und die Relativgeschwindigkeit des Objektes. Bei der Frequenzmodulation wechseln steigende und fallende Frequenzrampen miteinander ab, und indem man die Zwischenfrequenzsignale auf der steigenden Rampe und auf der fallenden Rampe einmal addiert und einmal subtrahiert, lassen sich die abstands- und geschwindigkeitsabhängigen Anteile voneinander trennen, so dass man Werte für den Abstand D und die Relativgeschwindigkeit V jedes georteten Objektes erhält.

Die Zwischenfrequenzsignale Z1 - Z4 werden einer Auswerteeinrichtung 26 zugeführt und dort kanalweise, jeweils über die Dauer einer Frequenzrampe, aufgezeichnet und durch schnelle Fourier-Transformation in ein Spektrum zerlegt. In diesem Spektrum zeichnet sich jedes Objekt durch einen Peak bei der durch den jeweiligen Objektabstand und die Relativgeschwindigkeit bestimmten Frequenz ab.

Die von den verschiedenen Spalten der Gruppe Rx empfangenen Radarechos weisen eine vom jeweiligen Azimutwinkel φ des Objekts abhängige Phasenverschiebung zueinander auf. Aufgrund der Bündelung des von der Sende-Antennenanordnung Tx gesendeten Signals ist auch die Amplitude des empfangenen Radarechos vom Azimutwinkel des Objekts abhängig. Durch Vergleich der Amplituden- und Phasenunterschiede mit einem entsprechenden Antennendiagramm lässt sich daher in der Auswerteeinrichtung 26 auch der Azimutwinkel φ bestimmen.

Eine elektronische Steuereinrichtung 28 steuert den Oszillator 14 und den Phasenschieber 20. In einem ersten Messzyklus, der eine oder mehrere Frequenzmodulationsrampen des Oszillators 14 umfassen kann, wird der Phasenschieber 20 auf eine Phasendifferenz δ eingestellt. Zwischen dem Sendesignal S1, das den Untergruppen 10a zugeführt wird, und dem Sendesignal S2, das den Untergruppen 10b zugeführt wird, besteht dann die Beziehung:

$$S2 = S1 * \exp(i2\pi\delta)$$

Das führt dazu, dass die Richtung, in der die von den Untergruppen 10a einerseits und den Untergruppen 10b andererseits emittierten Signale konstruktiv interferieren und eine Hauptkeule bilden, die in Elevation etwas von dem Elevationswinkel 0° (Normale auf das Substrat der Antennenordnung) abweicht.

In einem nachfolgenden Messzyklus, der wiederum eine oder mehrere Frequenzmodulationsrampen des Oszillators 14 umfassen kann, wird der Phasenschieber 20 auf eine Phasendifferenz δ+Δ eingestellt. Es gilt dann:

$$S2 = S1 * \exp(i2\pi(\delta+\Delta))$$

Die Phasendifferenz δ ist die gleiche wie im ersten Messzyklus und wird als Basis-Phasendifferenz bezeichnet. Die zusätzliche Phasendifferenz Δ beträgt bei einer idealen Antennenanordnung 180°. Wenn die Basis-Phasendifferenz δ = 0 ist, werden die Untergruppen 10a und 10b also gegenphasig angesteuert, mit der Folge, dass bei einem Elevationswinkel von 0° destruktive Interferenz eintritt. Wenn die Basis-Phasendifferenz δ von null verschieden ist, tritt die destruktive Interferenz bei einem von null verschiedenen Elevationswinkel auf.

Bei einer realen Sende-Antennenanordnung Tx können gewisse hardwarebedingte Phasenoffsets dazu führen, dass bei δ = 0 die destruktive Interferenz nicht exakt bei dem Elevationswinkel von 0° auftritt, sondern bei einem etwas anderen Elevationswinkel. Das lässt sich dadurch kompensieren, dass für Δ ein Wert gewählt wird, der etwas von 180° abweicht.

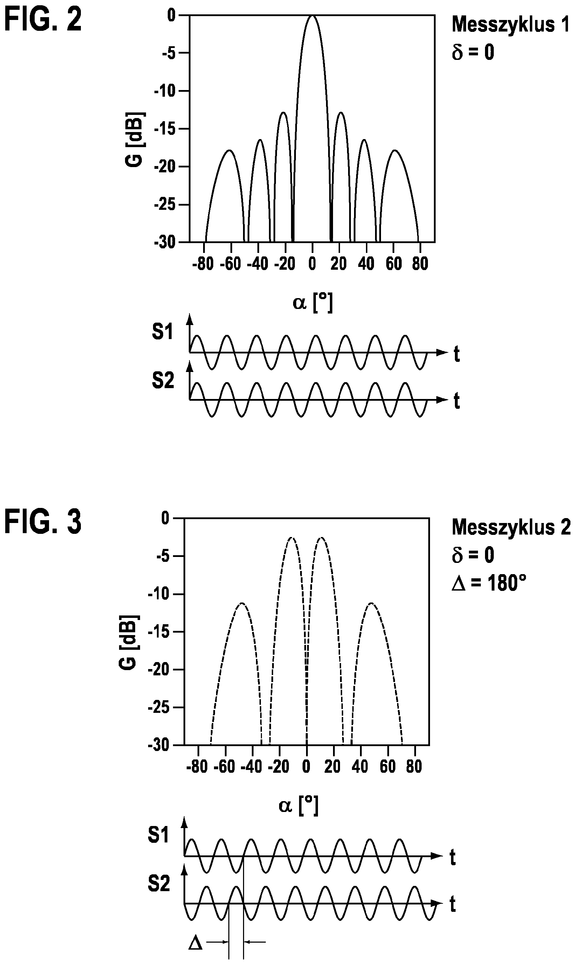

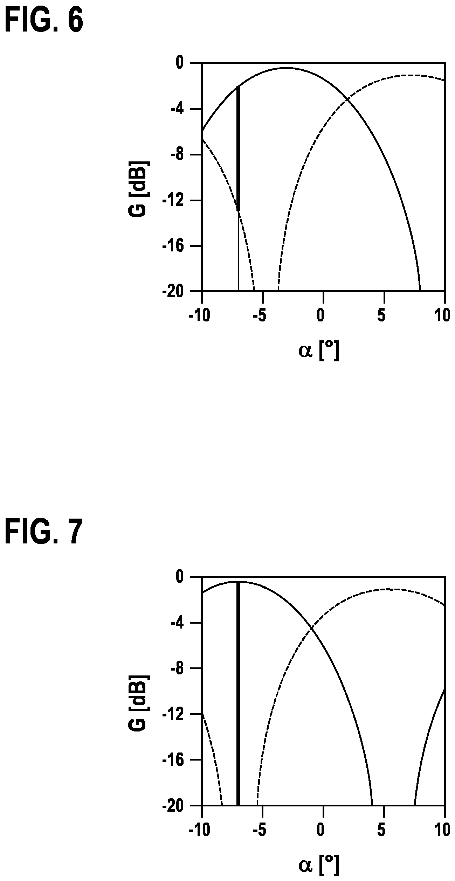

Figuren 2 und 7 zeigen Antennendiagramme, in denen jeweils der Gewinn G in dB (also logarithmisch) als Funktion des Elevationswinkels α aufgetragen ist.

Fig. 2 zeigt ein Antennendiagramm in Elevation für den ersten Messzyklus mit δ = 0. Die Sendesignale S1 und S2 sind phasengleich, und durch konstruktive Interferenz ergibt sich eine Hauptkeule mit einer Breite von etwa ± 15° bei dem Elevationswinkel α = 0°. Die Hauptkeule ist auf beiden Seiten symmetrisch von Nebenkeulen flankiert.

Fig. 3 zeigt das entsprechende Antennendiagramm für den zweiten Messzyklus mit $\delta$ = 0 und $\Delta$ = 180°. Durch Interferenz ergibt sich hier bei dem Elevationswinkel von 0° vollständige Auslöschung, und Maxima erster Ordnung liegen symmetrisch zu dem Elevationswinkel von 0°.

Wenn sich ein Objekt bei dem Elevationswinkel von 0° befindet, wird man in dieser Situation im ersten Messzyklus ein deutliches Radarecho erhalten, im zweiten Messzyklus hingegen praktisch kein Signal.

Wenn das Objekt dagegen etwas zu positiven oder negativen Elevationswinkeln verschoben ist, erhält man im ersten Messzyklus ein etwas schwächeres Signal, dafür aber ein messbares Signal auch im zweiten Messzyklus. Insgesamt reagiert das System somit relativ empfindlich auf kleine Änderungen des Elevationswinkels.

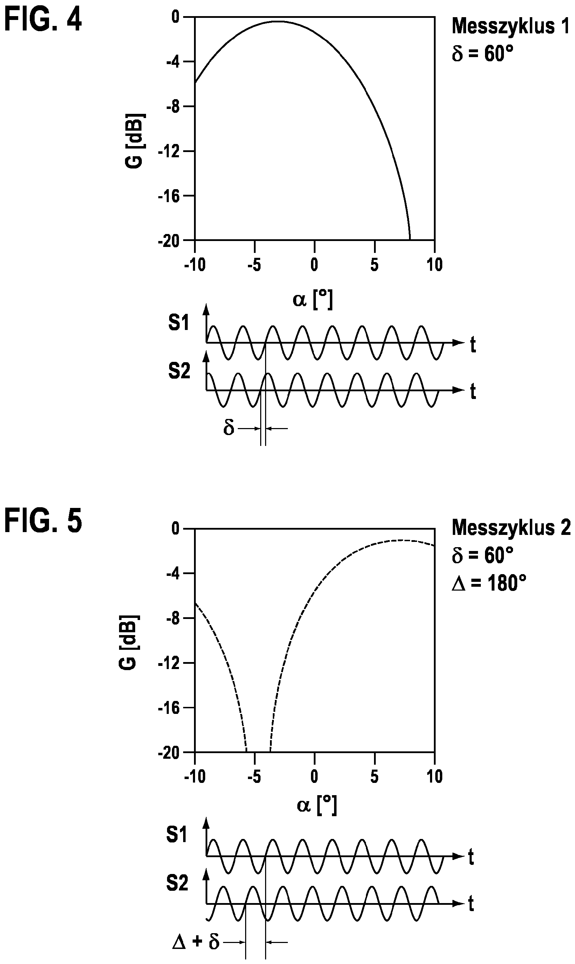

Fig. 4 und 5 zeigen die entsprechenden Antennendiagramme für den ersten und den zweiten Messzyklus für eine Basis-Phasendifferenz $\delta$ = 60°.

In Fig. 4 erkennt man, dass die Hauptkeule zu negativen Elevationswinkeln verschoben ist. Entsprechend ist in Fig. 5 der Ort maximaler Auslöschung zu negativen Elevationswinkeln verschoben.

In Fig. 6 sind die Antennendiagramme für den ersten und den zweiten Messzyklus in einem einzigen Diagramm zusammengefasst. Eine in durchgezogenen Linien eingezeichnete Kurve gibt den Gewinn im ersten Messzyklus an und eine gestrichelt eingezeichnete Kurve den Gewinn im zweiten Messzyklus. Für ein Objekt, das sich bei einem Elevationswinkel von etwa -7° befindet, ist der Unterschied zwischen den Gewinnen im ersten und im zweiten Messzyklus durch einen fetten Balken dargestellt. Dieser Unterschied repräsentiert den Pegelunterschied, der im ersten und im zweiten Messzyklus für die Signalpegel dieses Objekts (bei der durch den Abstand und die Relativgeschwindigkeit dieses Objekts definierten Zwischenfrequenz) gemessen wird.

Wie Fig. 1 zeigt, werden die Pegel P1 und P2, die für ein geortetes Objekt im ersten und im zweiten Messzyklus gemessen werden, von der Auswerteeinheit 26 an die Steuereinheit 28 gemeldet. Die Steuereinheit 28 variiert daraufhin die Basis-Phasendifferenz $\delta$, um den Pegelunterschied P1 - P2 zu maximieren. Die Änderung der Basis-Phasendifferenz $\delta$ führt zu einer Verschiebung der Kurven im Antennendiagramm, wie sie in Fig. 7 dargestellt ist. Infolge dessen vergrößert sich der Unterschied zwischen dem Gewinn und entsprechend der Pegelunterschied P1 - P2, und er erreicht bei einer bestimmten Basis-Phasendifferenz $\delta$ ein Maximum. Diese Basis-Phasendifferenz $\delta$ wird an die Auswerteeinrichtung 26 gemeldet.

Anhand der Antennendiagramme, die für eine gegebene Sende-Antennenanordnung Tx vorab ausgemessen werden können, lässt sich eine Beziehung aufstellen zwischen der Basis-Phasendifferenz $\delta$, bei der der Pegelunterschied maximal wird, und dem zugehörigen Elevationswinkel $\alpha$. Anhand dieser Beziehung ist die Steuereinrichtung 28 in der Lage, einen entsprechenden Schätzwert für den Elevationswinkel $\alpha$ auszugeben.

Wenn beim Einbau des Radarsensors in das Kraftfahrzeug ein Justagefehler aufgetreten ist, der dazu führt, dass das Substrat der Antennenanordnung nicht genau vertikal orientiert ist, so wird man mit der oben beschriebenen Anordnung für Objekte, deren Reflexionszentrum bei einem Elevationswinkel von 0° liegt, einen von 0° verschiedenen Elevationswinkel messen, wobei die Abweichung von 0° dem Justagefehler entspricht.

Da der Fall, dass der Elevationswinkel eines Objekts bei 0° liegt, statistisch am häufigsten sein wird, lässt sich die oben beschriebene Messung des Elevationswinkels $\alpha$ auch dazu nutzen, den Justagefehler zu kompensieren. Beispielsweise kann die Steuereinrichtung 28 die Phasendifferenz $\delta$ speichern, für die der Pegelunterschied maximal ist. Wenn dann nacheinander mehrere Objekte geortet werden, wird für die zugehörigen Basis-Phasendifferenzen $\delta$ ein gleitender Mittelwert gebildet, mit der Folge, dass die Antennenkeule in Elevation nach und nach verschwenkt wird, bis der Justagefehler ausgeglichen ist.

Ebenso ist es möglich, bei Inbetriebnahme des Radarsensors, nach dem Einbau in das Fahrzeug, eine Eichmessung bei dem Elevationswinkel von 0° vorzunehmen und die dabei erhaltenen Basis-Phasendifferenz zu speichern und als Anfangswert für alle künftigen Messungen mit dem Radarsensor zu verwenden.

In der vorstehenden Beschreibung wurde die Erfindung an einem Beispiel erläutert, bei dem, die Messung des Elevationswinkels $\alpha$ mit Hilfe der Sende-Antennenanordnung Tx geschieht. Alternativ ist es selbstverständlich auch möglich, hierzu die Empfangs-Antennenanordnung Rx zu verwenden. In dem Fall wäre jede Spalte der Antennenelemente 22 der Empfangs-Antennenanordnung Rx in zwei Untergruppen unterteilt, und der Phasenschieber 20 wäre so zwischen die jeweilige zweite Untergruppe und den Vierkanalmischer 24 geschaltet, dass in jedem Kanal die von den beiden Untergruppen empfangenen Signale mit der durch den Phasenschieber 20 bestimmten Phasendifferenz überlagert werden. Antennendiagramme, die denen in Fig. 2 bis 7 ähneln, würden dann die Winkelverteilung der Empfindlichkeit der Empfangs-Antennenanordnung Rx in Elevation angeben. Die Unterschiede in den Empfindlichkeiten führen wieder zu Pegelunterschieden, die die Bestimmung des Elevationswinkels erlauben.

**Patentansprüche**

1. Radarsensor für Kraftfahrzeuge, mit mindestens einer Gruppenantenne (10), die durch eine lineare Anordnung von Antennenelementen (12) gebildet wird, einer Speiseeinrichtung (16, 18, 20) zum Einspeisen von Sendesignalen (S1, S2) mit einstellbarer Phasenbeziehung in die Antennenelemente (12), einer Steuereinrichtung (28) zur Ansteuerung der Speiseeinrichtung, und einer Auswerteeinrichtung (26) zur Auswertung von empfangenen Radarechos und zur winkelauflösenden Ortung von Objekten, **dadurch gekennzeichnet, dass** die Gruppenantenne (10) in mindestens zwei nicht verschachtelte Untergruppen (10a, 10b) aufgeteilt ist, dass die Speiseeinrichtung (16, 18, 20) dazu ausgebildet ist, den Antennenelementen (12) jeder Untergruppe phasengleiche Sendesignale zuzuführen, während die Sendesignale für die verschiedenen Untergruppen eine einstellbare Phasendifferenz aufweisen, dass die Steuereinrichtung (28) dazu ausgebildet ist, die einstellbare Phasendifferenz von Messzyklus zu Messzyklus periodisch zu in der Weise zu ändern, dass die Sendesignale (S1, S2) in einem Messzyklus eine Basis-Phasendifferenz ($\delta$) aufweisen und in einem nächsten Messzyklus eine Phasendifferenz, die sich um einen festen Betrag ($\Delta$) von der Basis-Phasendifferenz unterscheidet, und dass die Steuereinrichtung (28) weiterhin dazu ausgebildet ist, die Basis-Phasendifferenz ($\delta$) anhand von Pegeln (P1, P2) der empfangenen Radarechos im Sinne einer Maximierung des Pegelunterschieds zwischen den Messzyklen einzustellen.

2. Radarsensor für Kraftfahrzeuge, mit mindestens einer Gruppenantenne, die durch eine lineare Anordnung von Antennenelementen gebildet wird, einer Überlagerungseinrichtung zum Überlagern von Empfangssignalen der Antennenelemente mit einstellbarer Phasenbeziehung, einer Steuereinrichtung zur Ansteuerung der Überlagerungseinrichtung, und einer Auswerteeinrichtung zur Auswertung der empfangenen Radarechos und zur winkelauflösenden Ortung von Objekten, **dadurch gekennzeichnet, dass** die Gruppenantenne in mindestens zwei nicht verschachtelte Untergruppen aufgeteilt ist, dass die Überlagerungseinrichtung dazu ausgebildet ist, die Empfangssignale der Antennenelemente jeder Untergruppe phasengleich zu überlagern, während die Empfangssignale der verschiedenen Untergruppen mit einer einstellbaren Phasendifferenz überlagert werden, dass die Steuereinrichtung dazu ausgebildet ist, die einstellbare Phasendifferenz von Messzyklus zu Messzyklus periodisch zu in der Weise zu ändern, dass die Empfangssignale in einem Messzyklus eine Basis-Phasendifferenz aufweisen und in einem nächsten Messzyklus eine Phasendifferenz, die sich um einen festen Betrag von der Basis-Phasendifferenz unterscheidet, und dass die Steuereinrichtung weiterhin dazu ausgebildet ist, die Basis-Phasendifferenz anhand von Pegeln der empfangenen Radarechos im Sinne einer Maximierung des Pegelunterschieds zwischen den Messzyklen einzustellen.

3. Radarsensor nach Anspruch 1 oder 2, bei dem die mindestens eine Gruppenantenne (10) vertikal orientiert ist

4. Radarsensor nach einem der Ansprüche 1 bis 3, bei dem die Steuereinrichtung (28) dazu ausgebildet ist, einen Standardwert für die Basis-Phasendifferenz $\delta$ zu speichern.

5. Radarsensor nach den Ansprüchen 3 und 4, bei dem die Steuereinheit (28) dazu ausgebildet ist, den gespeicherten Standardwert durch statistische Auswertung der für eine Vielzahl von Objekten gemessenen Elevationswinkel ($\alpha$) zu bestimmen.

## Claims

1. Radar sensor for motor vehicles, having at least one group antenna (10), which is formed by a linear arrangement of antenna elements (12), a feed device (16, 18, 20) for feeding transmission signals (S1, S2) having an adjustable phase relationship into the antenna elements (12), a control device (28) for actuating the feed device, and an evaluation device (26) for evaluating received radar echos and for angle-resolving location of objects, **characterized in that** the group antenna (10) is split into at least two non-interleaved subgroups (10a, 10b), **in that** the feed device (16, 18, 20) is designed to supply in-phase transmission signals to the antenna elements (12) of each subgroup while the transmission signals for the different subgroups have an adjustable phase difference, **in that** the control device (28) is designed to periodically change the adjustable phase difference from measurement cycle to measurement cycle such that the transmission signals (S1, S2) have a basic phase difference ($\delta$) in one measurement cycle and a phase difference that differs from the basic phase difference by a fixed amount ($\Delta$) in a next measurement cycle, and **in that** the control device (28) is furthermore designed to adjust the basic phase difference ($\delta$) on the basis of levels (P1, P2) of the received radar echos in order to maximize the level difference between the measurement cycles.

2. Radar sensor for motor vehicles, having at least one group antenna, which is formed by a linear arrangement of antenna elements, an overlay device for overlaying received signals of the antenna elements having an adjustable phase relationship, a control device for actuating the overlay device, and an evaluation device for evaluating the received radar echos and for angle-resolving location of objects, **characterized in that** the group antenna is split into at least two non-interleaved subgroups, **in that** the overlay device is designed to overlay the received signals of the antenna elements of each subgroup in-phase while the received signals of the different subgroups having an adjustable phase difference are overlaid, **in that** the control device is designed to periodically change the adjustable phase difference from measurement cycle to measurement cycle such that the received signals have a basic phase difference in one measurement cycle and a phase difference that differs from the basic phase difference by a fixed amount in a next measurement cycle, and **in that** the control device is furthermore designed to adjust the basic phase difference on the basis of levels of the received radar echos in order to maximize the level difference between the measurement cycles.

3. Radar sensor according to Claim 1 or 2, in which the at least one group antenna (10) is oriented vertically.

4. Radar sensor according to one of Claims 1 to 3, in which the control device (28) is designed to store a standard value for the basic phase difference $\delta$.

5. Radar sensor according to Claims 3 and 4, in which the control unit (28) is designed to determine the stored standard value by statistically evaluating the angles of elevation ($\alpha$) measured for a multiplicity of objects.

## Revendications

1. Capteur radar pour véhicules automobiles, comprenant au moins une antenne en réseau (10) qui est formée par un arrangement linéaire d'éléments d'antenne (12), un dispositif d'alimentation (16, 18, 20) destiné à injecter des signaux d'émission (S1, S2) ayant une relation de phases réglable dans les éléments d'antenne (12), un dispositif de commande (28) destiné à piloter le dispositif d'alimentation, et un dispositif d'interprétation (26) destiné à l'interprétation des échos radar reçus et à la localisation avec résolution angulaire d'objets, **caractérisé en ce que** l'antenne en réseau (10) est divisée en au moins deux sous-groupes (10a, 10b) non imbriqués, **en ce que** le dispositif d'alimentation (16, 18, 20) est configuré pour acheminer aux éléments d'antenne (12) de chaque sous-groupe des signaux d'émission en phase, alors que les signaux d'émission pour les différents sous-groupes présentent une différence de phase réglable, **en ce que** le dispositif de commande (28) est configuré pour modifier périodiquement la différence de phase réglable d'un cycle de mesure à l'autre de telle sorte que les signaux d'émission (S1, S2) dans un cycle de mesure présentent une différence de phase de base ($\delta$) et, dans un cycle de mesure suivant, une différence de phase qui se différencie d'une valeur fixe ($\Delta$) de la différence de phase de base, et **en ce que** le dispositif de commande (28) est en outre configuré pour régler la différence de phase de base ($\delta$) à l'aide des niveaux (P1, P2) des échos radar reçus dans le sens d'une maximisation de la différence de niveaux entre les cycles de mesure.

2. Capteur radar pour véhicules automobiles, comprenant au moins une antenne en réseau qui est formée par un arrangement linéaire d'éléments d'antenne, un dispositif de superposition destiné à superposer des signaux reçus des éléments d'antenne avec une relation de phase réglable, un dispositif de commande destiné à piloter le dispositif de superposition, et un dispositif d'interprétation destiné à l'interprétation des échos radar reçus et à la localisation avec résolution angulaire d'objets, **caractérisé en ce que** l'antenne en réseau est divisée en au moins deux sous-groupes non imbriqués, **en ce que** le dispositif de superposition est configuré pour superposer les signaux reçus des éléments d'antenne de chaque sous-groupe en phase, alors que les signaux reçus pour les différents sous-groupes sont superposés avec une différence de phase réglable, **en ce que** le dispositif de commande est configuré pour modifier périodiquement la différence de phase réglable d'un cycle de mesure à l'autre de telle sorte que les signaux reçus dans un cycle de mesure présentent une différence de phase de base et, dans un cycle de mesure suivant, une différence de phase qui se différencie d'une valeur fixe de la différence de phase de base, et **en ce que** le dispositif de commande est en outre configuré pour régler la différence de phase de base à l'aide des niveaux des échos radar reçus dans le sens d'une maximisation de la différence de niveaux entre les cycles de mesure.

3. Capteur radar selon la revendication 1 ou 2, dans lequel l'au moins une antenne en réseau (10) est orientée verticalement.

4. Capteur radar selon l'une des revendications 1 à 3, dans lequel le dispositif de commande (28) est configuré pour mémoriser une valeur par défaut pour la différence de phase de base $\delta$.

5. Capteur radar selon les revendications 3 et 4, avec lequel l'unité de commande (28) est configurée pour déterminer la valeur par défaut mémorisée par une interprétation statistique de l'angle d'élévation ($\alpha$) mesuré pour une pluralité d'objets.

FIG. 1

# FIG. 2

**Messzyklus 1**
$\delta = 0$

# FIG. 3

**Messzyklus 2**
$\delta = 0$
$\Delta = 180°$

## FIG. 4

Messzyklus 1
δ = 60°

## FIG. 5

Messzyklus 2
δ = 60°
Δ = 180°

## FIG. 6

## FIG. 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10256524 A1
- WO 2012089385 A1
- DE 102005049772 A1

**In der Beschreibung aufgeführte Nicht-Patentliteratur**

- Adaptive Fahrgeschwindigkeitsregelung ACC. Robert Bosch GmbH, 2002